(19) Europäisches Patentamt
European Patent Office
Office européen des brevets

(11) **EP 2 963 476 A1**

(12) **DEMANDE DE BREVET EUROPEEN**

(43) Date de publication:
06.01.2016 Bulletin 2016/01

(51) Int Cl.:
*G02B 26/08* *(2006.01)*  *F21S 8/10* *(2006.01)*
*G02B 26/10* *(2006.01)*  *G02B 27/09* *(2006.01)*

(21) Numéro de dépôt: 15173843.2

(22) Date de dépôt: 25.06.2015

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
MA

(30) Priorité: 30.06.2014 FR 1456118

(71) Demandeur: VALEO VISION
93012 Bobigny Cedex (FR)

(72) Inventeur: Albou, Pierre
75013 PARIS (FR)

(54) **DISPOSITIF OPTIQUE DE COLLIMATION POUR DIODE LASER**

(57) Ce dispositif optique (2) est destiné à former un spot lumineux de forme prédéterminée sur une cible (20) formant partie d'un dispositif de conversion de longueur d'onde, à partir d'un faisceau lumineux (F) émis par une diode laser (4) et balayé par un organe (18) de moyens de balayage. La diode laser (4) émet le faisceau (F) suivant un axe optique (X), un axe lent (Y) et un axe rapide (Z), ces axes étant perpendiculaires deux à deux. Il comprend des moyens optiques formant à la fois un objectif de projection (6), dans le plan contenant les axes optique (X) et lent (Y), et un anamorphoseur (8), dans le plan contenant les axes optique (X) et rapide (Z).

Fig. 5

**Description**

La présente invention concerne le domaine technique des dispositifs optiques pour véhicule automobile. Plus particulièrement, l'invention concerne un dispositif optique pour feu pour véhicule automobile.

Un véhicule automobile comprend généralement plusieurs feux constituant des moyens d'éclairage ou de signalisation remplissant des fonctions diverses. Ces fonctions sont notamment remplies grâce à l'émission d'un faisceau lumineux dont les propriétés varient d'une fonction à l'autre.

Lorsque le faisceau lumineux doit présenter une forte intensité lumineuse, il est connu d'utiliser une source de lumière de haute luminance, par exemple un laser. Il est alors nécessaire, d'une part, de modifier le spectre lumineux de ce faisceau par des moyens de conversion de longueur d'onde connus en soi, et, d'autre part, de collimater ce faisceau de manière à former un spot lumineux de forme prédéterminée sur une cible formée par lesdits moyens de conversion, grâce à un organe de moyens de balayage destinés à balayer une tache lumineuse, formée sur cet organe, sur les moyens de conversion de longueur d'onde afin de réaliser un faisceau lumineux sortant du feu après projection par un organe de projection ayant la forme souhaitée. Or, ces différents moyens sont soumis à des contraintes d'encombrement notamment à l'avant du véhicule automobile. En effet, la partie avant d'un véhicule automobile comprend de nombreux organes dont il convient de limiter au maximum l'encombrement.

On notera en outre que la taille du spot formé par le faisceau sur la cible en l'absence de balayage détermine la résolution des images projetées et est contrainte par l'application (la plus grande dimension du spot doit être inférieure à 1mm, de préférence inférieure à 0,3mm).

Pour pallier ce problème, une première solution consiste à utiliser une diode laser, qui occupe généralement moins d'espace qu'un laser conventionnel, et un organe de moyens de balayage formé par un ou des micro-miroirs, plus communément désignés par l'acronyme MEMS pour les termes anglo-saxons MicroElectroMechanical System. L'intensité du faisceau lumineux émis par une diode laser est certes moindre par rapport à celui émis par un laser conventionnel de même puissance, néanmoins elle reste tout à fait satisfaisante. En pratique, la diode laser (de forte puissance, supérieure à 1 W rayonné) présente une facette de sortie du faisceau lumineux de forme générale rectangulaire et émet un faisceau lumineux selon plusieurs modes de propagation, ce qui interdit de considérer comme source le waist du faisceau comme on le fait classiquement pour les autres lasers (on doit considérer la facette de sortie) : le faisceau est propagé suivant un axe optique, qui correspond à la direction de propagation de l'énergie véhiculée par le faisceau, un axe lent et un axe rapide, ces trois axes étant perpendiculaires deux à deux.

Il est impossible de collimater simplement le faisceau sur l'organe de moyens de balayage avec une seule lentille classique lorsque cet organe est situé à une distance élevée du dispositif de collimation (supérieure notamment à 50mm), ce qui est en pratique le plus souvent le cas. En effet, si on utilise une lentille de petite focale, la taille de la facette de sortie de la source suivant sa grande dimension provoque une divergence inacceptable du faisceau conduisant à un spot lumineux trop grand sur le dispositif de conversion. Si on utilise une lentille de grande focale, la divergence du faisceau est faible, mais son grand axe de départ (sur la surface de sortie de la lentille) est trop grand par rapport à la taille souhaitée du spot, en raison de la divergence importante du faisceau de la diode suivant son axe rapide (perpendiculaire au grand côté de la facette de sortie).Une simple collimation pour fonctionner impose des contraintes géométriques souvent inacceptables sur les positions relatives de la diode laser et du dispositif de conversion.

Une deuxième solution consiste à focaliser le faisceau sur la cible. Mais les contraintes géométriques évoquées ci-dessus conduisent à former une tache s'étendant au-delà du contour de l'organe de moyens de balayage, si bien qu'il faut utiliser un diaphragme pour éviter d'éclairer inutilement des éléments environnant l'organe. Cela engendre une baisse importante du rendement du dispositif, ce qui n'est pas acceptable.

Un but de l'invention est de fournir un dispositif capable de former un spot lumineux de forme prédéterminée sur le dispositif de conversion à partir d'un faisceau lumineux émis par une diode laser, la position relative de la diode laser par rapport à l'organe de moyens de balayage et au dispositif de conversion étant déterminée.

A cet effet, on prévoit selon l'invention un dispositif optique pour former un spot lumineux de forme prédéterminée sur une cible formant partie d'un dispositif de conversion de longueur d'onde, à partir d'un faisceau lumineux émis par une diode laser et balayé par un organe de moyens de balayage, la diode laser émettant le faisceau suivant un axe optique, un axe lent et un axe rapide, ces axes étant perpendiculaires deux à deux, caractérisé en ce qu'il comprend des moyens optiques formant à la fois un objectif de projection, dans le plan contenant les axes optique et lent, et un anamorphoseur, dans le plan contenant les axes optique et rapide.

Ainsi, les moyens optiques formant un objectif de projection dans le premier plan contenant les axes optique et lent, le dispositif optique permet de focaliser simplement la source de grande étendue dans ce premier plan sur le dispositif de conversion. Compte tenu de la faible divergence du faisceau suivant l'axe lent, ceci permet d'assurer sur la face de sortie du système optique une dimension de faisceau voisine de la taille du l'organe de moyens de balayage dans le plan considéré, de sorte que le faisceau convergeant vers le spot (image, de plus petite dimension) situé sur le dispositif de conversion passe en plus grande partie au moins sur l'organe de moyens de balayage situé entre le dispositif optique et le dispositif de conversion. Les moyens optiques formant également un anamorphoseur dans le second plan contenant les axes optique et rapide, le dispositif optique permet de mettre en forme le faisceau fortement divergent dans ce second plan pour que la dimension dans ce second plan de la tache lumineuse formée soit contenue dans l'organe de moyens de balayage, tout en ayant une dimension la plus petite possible (inférieure ou égale à la taille maximale du spot pour l'application) sur le dispositif de conversion. On forme bien ainsi un spot lumineux de forme désirée sur le dispositif de conversion, passant par un dispositif de balayage de taille donnée à partir d'une diode laser, la position de la diode laser par rapport à l'organe de moyens de balayage et au dispositif de conversion étant prédéterminée.

Selon un premier mode de réalisation de l'invention, les moyens formant objectif et anamorphoseur comprennent trois dioptres courbes de réfraction situés en aval de la diode laser en considérant le sens de propagation du faisceau lumineux, le dioptre le plus éloigné de la diode, dit dioptre distant, étant divergent et les deux autres, dits dioptres proches, étant convergents.

Avantageusement, chacun des dioptres courbes de réfraction est formé par une lentille présentant une surface plane d'entrée de lumière et une surface courbe de sortie de lumière, la surface de sortie de lumière de la lentille la plus éloignée de la diode formant le dioptre distant, et les surfaces de sortie de lumière des deux autres lentilles formant les deux dioptres proches.

Le dispositif optique est ainsi relativement simple, puisqu'il est constitué de trois lentilles simples classiques.

On notera que les fonctions optiques des différents dioptres courbes de réfraction peuvent être réparties entre les deux surfaces des lentilles les formant, de sorte que l'on puisse remplacer les lentilles de type « plan convexe » et « plan concave » décrites ci-dessus par des lentilles de même fonction de transfert, de type « biconvexe » ou « biconcave ». Une telle transformation est bien connue de l'homme de l'art.

Selon une variante du premier mode de réalisation de l'invention, les deux dioptres proches sont formés par des surfaces respectivement d'entrée et de sortie de lumière d'une lentille convexe convergente, et le dioptre distant est formé par une surface de sortie de lumière d'une lentille concave divergente, une surface d'entrée de lumière de la lentille concave divergente étant plane.

Le dispositif est ainsi plus simple à agencer, puisqu'agencer deux lentilles relativement l'une par rapport à l'autre, notamment pour aligner leurs axes optiques et pour les positionner correctement en fonction de leurs distances focales respectives, est plus simple qu'agencer trois lentilles les unes par rapport aux autres.

Selon un deuxième mode de réalisation de l'invention, les moyens formant objectif et anamorphoseur comprennent deux dioptres courbes de réfraction situés en aval de la diode laser en considérant le sens de propagation du faisceau lumineux, le dioptre le plus éloigné de la diode, dit dioptre distant, étant divergent, et l'autre dioptre, dit dioptre proche, étant convergent et présentant une courbure dans le plan contenant les axes optique et lent différente de la courbure dans le plan contenant les axes optique et rapide.

Avantageusement, les dioptres distant et proche sont respectivement formés par une surface d'entrée de lumière et une surface de sortie de lumière d'une lentille, la surface d'entrée de lumière de cette lentille étant astigmate.

Le dispositif optique est ainsi encore plus simple à agencer, puisqu'il n'y a plus qu'à placer correctement la lentille par rapport à la diode laser, en distance afin que les points focaux soient placés convenablement, et en orientation pour aligner son axe optique avec celui de la diode laser.

De préférence, les moyens formant objectif et anamorphoseur sont fabriqués au moins en partie dans un matériau choisi parmi le silicone, le polyméthacrylate de méthyle et un verre.

Ces matériaux sont performants pour transmettre un faisceau lumineux dont le spectre lumineux est inclus dans le domaine visible.

De préférence, la diode laser présente une facette de sortie du faisceau lumineux de forme générale rectangulaire, la longueur de chaque côté de cette facette de sortie étant au moins deux fois supérieure à la longueur d'onde du faisceau lumineux émis par la diode, et la longueur du plus grand côté de cette facette étant au moins deux fois supérieure à celle du petit côté.

De préférence, la longueur d'onde du faisceau lumineux émis par la diode laser est inférieure à 455 nm.

On permet ainsi que la longueur de chaque côté de la facette de sortie de la diode laser puisse être de l'ordre de 1 $\mu$m ou plus grande sans pour autant que les phénomènes de diffraction nuisibles soient trop importants.

On prévoit également selon l'invention un feu pour véhicule automobile, comprenant :

- une diode laser émettant un faisceau lumineux suivant un axe optique, un axe lent et un axe rapide, ces axes étant perpendiculaires deux à deux,
- un dispositif de conversion de longueur d'onde comprenant une cible,
- un organe de moyens de balayage pour balayer le faisceau lumineux sur la cible, et
- un dispositif optique pour former un spot lumineux de forme prédéterminée sur la cible à partir du faisceau lumineux émis par la diode laser,

caractérisé en ce que le dispositif optique est tel que défini plus haut.

Avantageusement, l'organe de moyens de balayage comprend au moins un micro-miroir.

On permet ainsi de balayer la tache lumineuse, formée sur l'organe de moyens de balayage, sur un dispositif de conversion de longueur d'onde dans le but d'émettre un faisceau en dehors du feu présentant un spectre lumineux désiré, par exemple blanc.

L'invention sera mieux comprise à la lecture de la description qui va suivre donnée uniquement à titre d'exemple et faite en référence aux dessins dans lesquels :

- la figure 1 est une vue schématique d'un dispositif optique selon un premier mode de réalisation de l'invention,
- la figure 2 est une vue en coupe longitudinale du dispositif illustré en figure 1,
- la figure 3 est une vue schématique d'un dispositif optique selon une variante du premier mode de réalisation de l'invention,
- la figure 4 illustre la propagation du faisceau lumineux émis par une diode laser à travers le dispositif de la figure 3,
- la figure 5 est une vue à plus petite échelle du dispositif de la figure 4,
- la figure 6 est une vue de côté du dispositif de la figure 5,
- la figure 7 illustre le comportement des deux dioptres proches du dispositif de la figure 6,
- la figure 8 est une vue schématique d'un dispositif optique selon un second mode de réalisation de l'invention,
- la figure 9 illustre la propagation du faisceau lumineux émis par une diode laser à travers le dispositif de la figure 8,
- la figure 10 est une vue à plus petite échelle du dispositif de la figure 9,
- la figure 11 illustre le comportement du dioptre proche du dispositif de la figure 10,
- la figure 12 illustre le spot lumineux formé sur une cible du dispositif de conversion par un dispositif optique selon l'invention à partir d'une diode laser,
- la figure 13 illustre la répartition en intensité lumineuse, respectivement selon les axes lent et rapide, dans le spot de la figure 12, et
- les figures 14 et 15 sont des vues suivant les flèches XIV et XV des lentilles illustrées en figure 3.

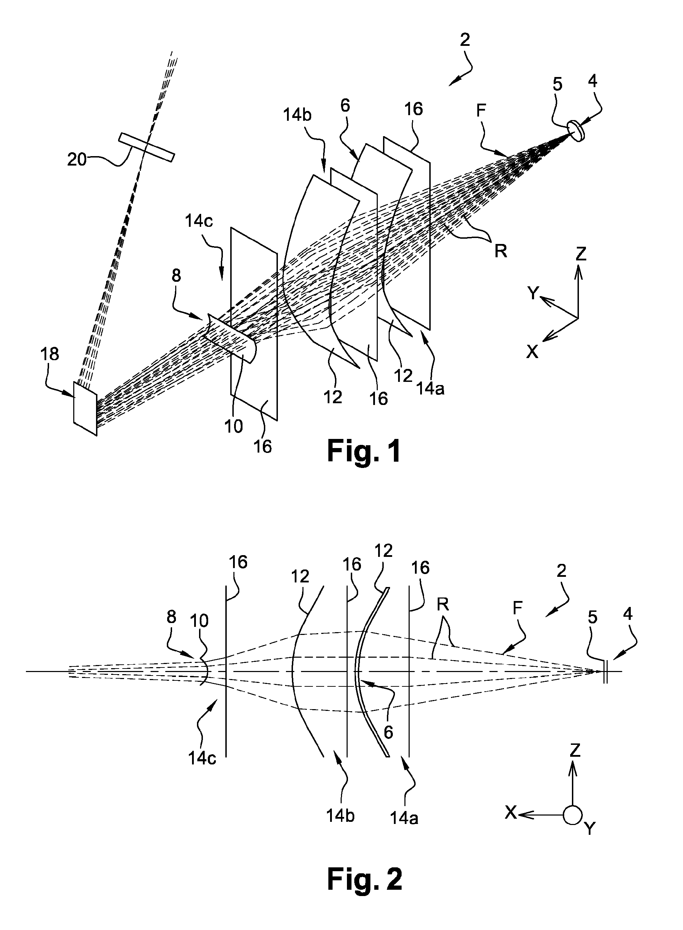

On a illustré en figures 1 et 2 un dispositif optique 2 selon un premier mode de réalisation de l'invention. Ce dispositif optique 2 est placé au droit d'une source de lumière formée par une diode laser 4. Cette diode laser 4 émet un faisceau lumineux F sensiblement monochromatique, à une longueur d'onde préférentiellement inférieure à 455 nm, par exemple de l'ordre de 445 nm de sorte qu'elle émette une lumière bleue. La diode laser 4 présente une facette de sortie du faisceau lumineux (non représentée pour des raisons de clarté des figures) de forme générale rectangulaire, la longueur de chaque côté de cette facette de sortie étant au moins deux fois supérieure à la longueur d'onde du faisceau lumineux F émis par la diode 4 et la longueur du plus grand côté de cette facette étant au moins deux fois supérieure à celle du petit côté.

La forme rectangulaire de la facette de sortie du faisceau lumineux de la diode laser 4 implique que la diode laser 4 émet le faisceau suivant un axe optique X, un axe lent Y, parallèle à la direction de la grande dimension de l'ouverture d'émission, et un axe rapide Z, parallèle à la direction de la petite dimension de l'ouverture d'émission, ces axes étant perpendiculaires deux à deux. La facette de sortie est couverte par une lame plane de protection 5 de la diode laser 4.

Le dispositif optique 2 comprend des moyens optiques formant à la fois un objectif de projection 6, dans le plan contenant les axes optique X et lent Y, et un anamorphoseur 8, dans le plan contenant les axes optique X et rapide Z. On verra dans la suite comment ces fonctions sont réalisées.

Les moyens formant objectif 6 et anamorphoseur 8 comprennent trois dioptres courbes de réfraction 10, 12 situés en aval de la diode laser 4 en considérant le sens de propagation du faisceau lumineux F, le dioptre le plus éloigné de la diode 4, dit dioptre distant 10, étant divergent et les deux autres, dits dioptres proches 12, étant convergents. Chacun des dioptres courbes de réfraction 10, 12 est formé par une lentille 14 présentant par exemple une surface plane d'entrée de lumière 16 et une surface courbe de sortie de lumière (des lentilles biconvexes, convexe-planes, biconcaves ou concave-planes peuvent être également être utilisées), la surface de sortie de lumière de la lentille la plus éloignée de la diode formant le dioptre distant 10, et les surfaces de sortie de lumière des deux autres lentilles formant les deux dioptres proches 12. A titre d'exemple de réalisation, les moyens formant objectif 6 et anamorphoseur 8, c'est-à-dire les lentilles 14, sont fabriqués au moins en partie dans un matériau choisi parmi le silicone, le polyméthacrylate de méthyle et un verre. Préférentiellement, toutes les lentilles 14 sont fabriquées avec le même matériau. La lame de protection 5 de la diode laser 4 est en général réalisée en verre par le fabricant du composant.

Un organe 18 de moyens de balayage pour balayer le faisceau lumineux F sur un dispositif de conversion de longueur d'onde comprenant une cible 20 est placé sur le trajet optique du faisceau F, en aval du dispositif optique 2 en considérant le sens de propagation du faisceau F. Cet organe 18 est formé par un ou plusieurs micro-miroirs, plus communément désignés par l'acronyme MEMS pour les termes anglo-saxons MicroElectroMechanical System, mais on pourra prévoir que l'organe 18 soit formé par un autre moyen de balayage. Le dispositif de conversion 20 est par exemple un corps comprenant des matériaux phosphorescents ou luminescents, par exemple des cristaux YAG (Yttrium Aluminium Garnet) dopés aux terres rares, du ZnS, etc.

On va maintenant détailler comment réaliser les lentilles 14 de manière à ce que le dispositif optique 2 permette de former un spot lumineux de forme prédéterminée sur la cible 20 formant partie du dispositif de conversion à partir du faisceau lumineux émis par la diode laser 4 et balayé par l'organe 18 de moyens de balayage.

Dans les raisonnements qui suivent, on considère que l'organe 18 est retiré de la trajectoire du faisceau lumineux F, et que la cible 20 est déplacée de sorte qu'elle soit confondue avec l'image de la cible par une rotation autour du centre de l'organe 18 déplaçant le centre de la cible 20 sur l'axe optique X. On dit alors que l'on a « déplié » le faisceau, puisqu'on considère ainsi qu'il suit une trajectoire sensiblement rectiligne. Cela permet de simplifier considérablement les calculs, sans pour autant les rendre erronés.

La première lentille 14a, c'est-à-dire la plus proche de la diode laser 4, est une lentille de révolution autour d'un axe qui est confondu avec l'axe optique X de la diode laser 4 lorsqu'elle est convenablement placée, stigmatique entre le centre de la facette de sortie du faisceau lumineux de la diode laser 4 et l'intersection avec l'axe X de la cible 20, si on considère le faisceau F « déplié ». Ce stigmatisme prend en compte la traversée de deux lames planes parallèles, perpendiculaires à l'axe optique X. La première lame plane, réelle, correspond à la lame de protection 5, et la seconde lame plane, fictive, est constituée du même matériau que les deuxième et troisième lentilles 14b, 14c et d'épaisseur égale à la somme des épaisseurs au centre des deuxième et troisième lentilles 14b, 14c. Ces lames sont situées, respectivement, entre la diode laser 4 et la première lentille 14a et entre la première lentille 14a et le dispositif de conversion 20. Leur position précise est indifférente.

La focale de la première lentille 14a est choisie de manière à ce que le grandissement d'un système constitué de la première lentille 14a et des deux lames planes soit égale au rapport de la dimension suivant l'axe lent Y (grand côté) de la facette de sortie de la diode laser 4 par la plus grande dimension souhaitée pour le spot à former sur la cible 20 perpendiculairement à l'axe optique X.

La deuxième lentille 14b est une lentille cylindrique, d'axe parallèle à l'axe lent Y de la diode laser 4, telle que, dans sa section droite contenant l'axe optique X, tous les rayons R issus du centre de la diode laser 4, après avoir traversés la lame de protection 5 de la diode 4 puis la première et la deuxième lentille 14a, 14b, convergent vers un point Q (non représenté sur les figures) de l'axe optique X situé entre la cible 20 et la face d'entrée 16 de la troisième lentille.

La troisième lentille 14c est une lentille cylindrique, d'axe parallèle à l'axe lent Y de la diode laser 4, stigmatique, en section droite, entre l'intersection de l'axe optique X et du dispositif de conversion 20 et le point Q. Cette lentille 14c (ou au moins sa face d'entrée 16 lorsque la lentille 14c est épaisse) est placée entre ce point Q et la face de sortie de la deuxième lentille 14b. La troisième lentille 14c est donc divergente.

Les positions du point Q et de la troisième lentille 14c sont choisies de manière à ce que, en section droite, l'enveloppe du faisceau calculé pour les rayons issus du centre de la source à l'intérieur d'un secteur angulaire prédéterminé notamment égal à la divergence du faisceau suivant l'axe rapide (par exemple prise à $1/e^2$) passe par les bords de l'organe 18, convenablement incliné pour prendre en compte l'incidence du faisceau sur cet organe 18, qui ne peut jamais être normale, car il forme des moyens de balayage et il est inutile de réfléchir de le faisceau F sur la diode laser 4.

Les lentilles 14 et les dioptres 10, 12 peuvent être définis mathématiquement simplement de ce qui précède, après avoir choisi le type des lentilles, leur matériau, leurs épaisseurs et leurs écartements. On donne plus loin le détail des calculs de la variante suivante.

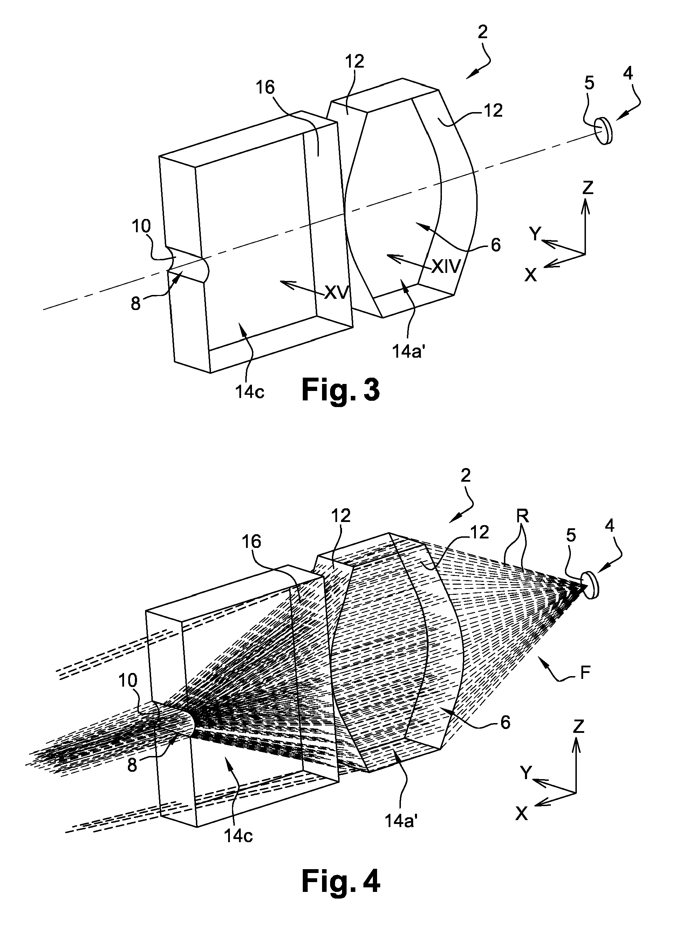

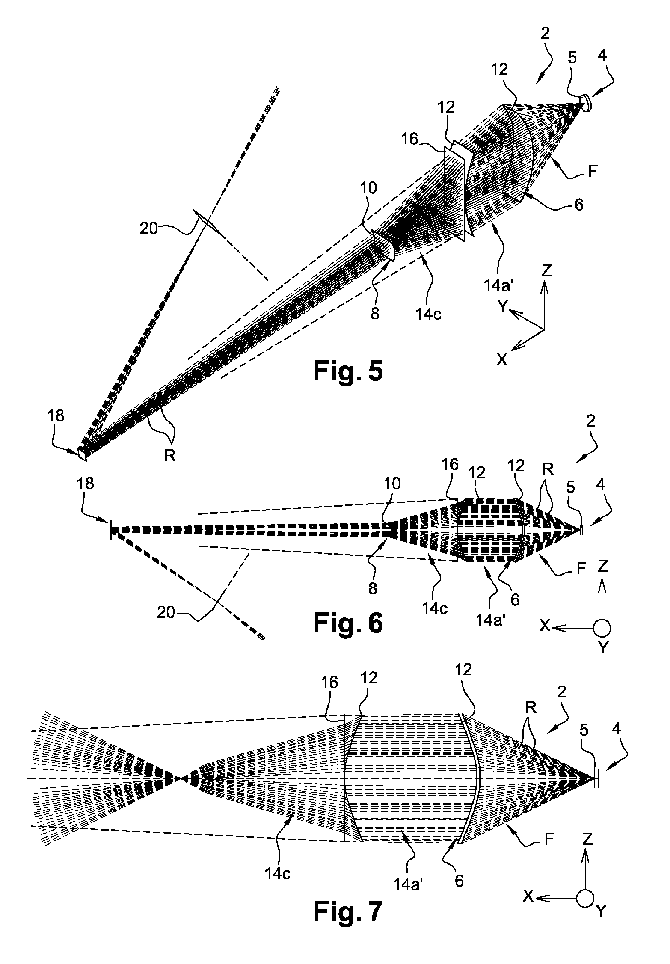

On a illustré en figure 3 à 7 un dispositif optique 2 selon une variante du premier mode de réalisation de l'invention. Ce dispositif optique 2 diffère du précédent en ce que les deux dioptres proches 12 sont formés par des surfaces respectivement d'entrée et de sortie de lumière d'une lentille convexe convergente 14a', et le dioptre distant 10 est formé par une surface de sortie de lumière d'une lentille concave divergente 14c, une surface d'entrée de lumière 16 de la lentille concave divergente 14c étant plane. Le dispositif ne comporte ainsi plus que deux lentilles 14a' et 14c.

Le calcul de la lentille convexe convergente 14a' est équivalent au calcul des deux premières lentilles 14a, 14b du dispositif optique 2 à trois lentilles décrit plus haut. En effet, si on calcule les première et deuxième lentilles 14a, 14b du dispositif à trois lentilles, en imposant que la première lentille 14a soit une lentille de type « plan convexe », avec sa face plane 16 tournée vers la cible 20 et que la deuxième lentille 14b soit également de type « plan convexe », mais avec sa face plane 16 tournée vers la diode laser 4, et qu'en outre les épaisseurs de ces deux lentilles 14a, 14b soient telles que leurs faces planes 16 soient en contact et que les deux lentilles 14a, 14b soient constituées en des matériaux d'indice de réfraction identique à la longueur d'onde de la diode laser 4 utilisée, on peut utiliser une unique lentille 14a' de type « biconvexe » en lieu et place des deux lentilles 14a, 14b de type « plan convexe », cette unique lentille 14a' ayant pour face d'entrée et de sortie, respectivement, les faces convexes de la première 14a et de la deuxième 14b lentille du mode de réalisation à trois lentilles.

Les calculs permettant de définir les lentilles et les dioptres sont détaillés dans ce qui suit.

On nomme :

δ la distance de l'émetteur à la lame de protection 5
l l'épaisseur de la lame 5

ni l'indice de réfraction du matériau de la lame 5

$t_1$ la distance de la lame 5 au dioptre d'entrée 12 de la lentille 14a'

$e_1$ l'épaisseur au centre de la lentille 14a'

$t_2$ la distance entre les lentilles 14a' et 14c (du sommet du dioptre de sortie 12 de la lentille 14a' à la face d'entrée plane 16 de la lentille 14c)

$e_2$ l'épaisseur au centre de la lentille 14c

n l'indice de réfraction du matériau des lentilles 14a' et 14c (supposé identique)

$\Delta$ la distance du centre de la surface de sortie 10 de la lentille 14c à l'intersection de l'axe optique X et la cible 20 (dans le système déplié)

q la distance du centre de la surface de sortie 10 de la lentille 14c au point Q

$R_{M\perp}$ la demi hauteur suivant l'axe rapide Z de l'organe de balayage 18 ($R_{M\perp}$ dépend de l'angle d'incidence du faisceau F sur l'organe de balayage)

$D_{MPh}$ la distance de l'intersection avec l'axe optique X de l'organe de balayage 18 à celle (dans le système déplié) de la cible 20

$\alpha_{M\perp}$ la demi ouverture au sommet du faisceau F de la diode 4 suivant l'axe rapide Z (par exemple à $1/e^2$),

$\delta$, l, ni et $\alpha_{M\perp}$ sont imposés par la source 4 choisie, n par le matériau sélectionné pour la réalisation des lentilles 14a' et 14c et la longueur d'onde de la diode laser 4 utilisée

$\Delta$ et $R_{M\perp}$ sont imposés par l'application (implantation des éléments dans un module d'éclairage)

$e_1$, $t_2$ $e_2$ sont des paramètres de conception

$t_1$ est déterminé (voir plus loin) de manière à obtenir la taille de spot souhaitée, q de manière à ne pas perdre de lumière autour de l'organe de balayage 18

On pose : $\mathcal{T} = \delta + l + t_1$ $\mathcal{T}$ ( est le « tirage » de la lentille 14a') $\mathcal{E} = e_1 + e_2$ ($\mathcal{E}$ est l'épaisseur totale au centre des lentilles 14a' et 14c)

$$Д = t_2 + \Delta$$

(les paramètres physiques $\Delta$ et $t_2$ n'apparaissent dans le calcul de la surface d'entrée 12 de la lentille 14a' qu'à travers $Д$ )

Dans le calcul des dioptres proches 12 on considère un rayon issu du centre de la source 4 (origine du repère) faisant un angle $\alpha$ avec l'axe optique X et on nomme $\gamma$ l'angle d'incidence de ce rayon sur la cible 20 (le rayon rencontre la cible 20 à son point d'intersection avec l'axe optique X) en considérant le faisceau déplié.

On nomme $\beta$ et $\varepsilon$ deux angles intermédiaires (angle du rayon, respectivement, aux normales aux faces de la lame de protection 5 où il les traverse, à l'intérieur de la matière, et à la face d'entrée 16 de la lentille 14c, à l'intérieur de la matière) :

$$n_l \cdot \sin\beta = \sin\alpha \ et \ n \cdot \sin\epsilon = \sin\gamma \qquad (0)$$

Soient (x,z) les coordonnées du point de la surface correspondant au rayon considéré (point courant recherché),

Calcul de la surface d'entrée 12 de la lentille 14a' (dioptre 12 le plus proche de la source 4) :

On suppose dans ce calcul que le dioptre distant 10 est plan (cela revient à travailler en coupe dans le plan (O, X, Y) ).

Géométrie :

$$z = l \cdot \tan\beta + (x - l) \cdot \tan\alpha = Д \cdot \tan\gamma + \big(\mathcal{E} - (x - \mathcal{T})\big) \cdot \tan\epsilon \qquad (1)$$

Chemin optique constant (stigmatisme) :

$$n_l \frac{l}{\cos\beta} + \frac{x-l}{\cos\alpha} + n \frac{(\mathcal{E}-(x-\mathcal{T}))}{\cos\varepsilon} + \frac{Д}{\cos\gamma} = \mathcal{T} + (n_l - 1) \cdot l + n \cdot \mathcal{E} + Д \qquad (2)$$

(on nomme K le chemin *optique* :

$$K = \mathcal{T} + (n_l - 1) \cdot l + n \cdot \mathcal{E} + Д\,)$$

On élimine x entre (1) et (2), d'où

$$(\tan\alpha + \tan\varepsilon)\left( K + l\left(\frac{1}{\cos\alpha} - \frac{n_l}{\cos\beta}\right) - n\frac{\mathcal{T}+\mathcal{E}}{\cos\varepsilon} - \frac{Д}{\cos\gamma}\right)$$
$$= \left(\frac{1}{\cos\alpha} - \frac{n}{\cos\varepsilon}\right)(Д \cdot \tan\gamma + (\mathcal{T}+\mathcal{E})\tan\varepsilon + l \cdot (\tan\alpha - \tan\beta))$$

$$(3)$$

qui est une équation en $\gamma$ (moyennant (0)) soluble numériquement.

On a donc calculé $\gamma(\alpha)$ d'où on tire grâce à (2) x($\alpha$) puis grâce à (1) z($\alpha$) et donc les coordonnées du point recherché en fonction d'un paramètre ($\alpha$).

Détermination de $\mathcal{T}$ :

Approximation paraxiale ($\alpha$, donc $\beta$, $\gamma$ et $\varepsilon$ tendent vers 0) : (3) devient

$$(\alpha + \varepsilon)(1 - n)\mathcal{T} = (1 - n)\big(Д\gamma + (\mathcal{T}+\mathcal{E})\varepsilon + l(\alpha - \beta)\big)$$

D'où, comme dans cette approximation, $\beta = \alpha/n_l$ et $= \gamma/n$,

$$\frac{\alpha}{\gamma} = \frac{Д + \frac{\mathcal{E}}{n}}{\mathcal{T} - l + \frac{l}{n_l}} = g \qquad (4)$$

grandissement paraxial du système, choisi égal au rapport de la plus grande dimension du spot sur la cible 20 à la plus grande dimension de la facette de sortie de la diode laser 4.

De (4) on tire $\mathcal{T}$ en fonction des paramètres.

Calcul de la surface de sortie 12 de la lentille 14a' (dioptre 12 le plus éloigné de la source 4) :

Soient ($x_s, z_s$) les coordonnées du point de la surface correspondant au rayon considéré (point courant recherché),

On connait le point d'entrée du rayon sur la lentille, calculé précédemment, de coordonnées (x($\alpha$), z($\alpha$)), et l'angle $\varepsilon(\alpha)$ correspondant (tiré de $\gamma(\alpha)$ d'après (0)).

Le point Q est de coordonnées $\begin{pmatrix} \mathcal{T} + \mathcal{E} + t_2 + q \\ 0 \end{pmatrix}$.

On écrit la constance du chemin optique entre le centre de la facette de sortie de la diode 4 et le point Q.

Soit $\lambda$ la longueur du trajet du rayon dans la lentille 14a', on a :

$$n_l \frac{l}{\cos\beta} + \frac{x-l}{\cos\alpha} + n\lambda + \sqrt{(\mathcal{T}+E+t_2+q-x_s)^2 + z_s^2} = \mathcal{T} + (n_l-1)l + n\cdot e_1 + t_2 + e_2 + q$$

$$(5)$$

Avec

$$\begin{pmatrix} x_s \\ z_s \end{pmatrix} = \begin{pmatrix} x + \lambda \cos \varepsilon \\ z - \lambda \sin \varepsilon \end{pmatrix} \tag{6}$$

En substituant $x_s$ et $z_s$ dans (5) d'après (6) on obtient une équation en $\lambda$ en fonction des paramètres et de $\alpha$ ($\beta$ est une fonction de $\alpha$, d'après (0)), d'où on tire $\lambda(\alpha)$ (en isolant la racine carrée puis en élevant les deux termes au carré, on obtient une équation polynomiale du second degré en $\lambda$).

D'après (6) on a alors la position du point courant recherché en fonction de $\alpha$.

L'homme de l'art calculera facilement la lentille 14c. On pourra alors déterminer, pour un rayon d'angle $\alpha$ à l'axe optique X issu du centre de la facette de sortie de la diode laser 4, contenu dans le plan (O,X,Z), son point de passage $(x_f(\alpha), z_f(\alpha))$ sur le dioptre distant 10.

Afin qu'une partie de l'énergie du faisceau F ne soit pas perdue au-dessus ou en-dessous de l'organe de balayage 18, il faut que

$$\frac{z_f(\alpha_{M\perp})}{T + E + \measuredangle - x_f(\alpha_{M\perp})} \leq \frac{R_{M\perp}}{D_{MPh}} \tag{7}$$

Or $x_f(\alpha)$ et $z_f(\alpha)$ dépendent de q et (7) peut donc être considérée comme une condition sur q (on détermine q par itération pour que $\dfrac{z_f(\alpha_{M\perp})}{T + E + \measuredangle - x_f(\alpha_{M\perp})} = \dfrac{R_{M\perp}}{D_{MPh}}$ .

Dans un mode de réalisation avantageux, $t_2 = 0$ : les lentilles 14a' et 14c sont alors en contact, ce qui permet un positionnement mutuel plus aisé.

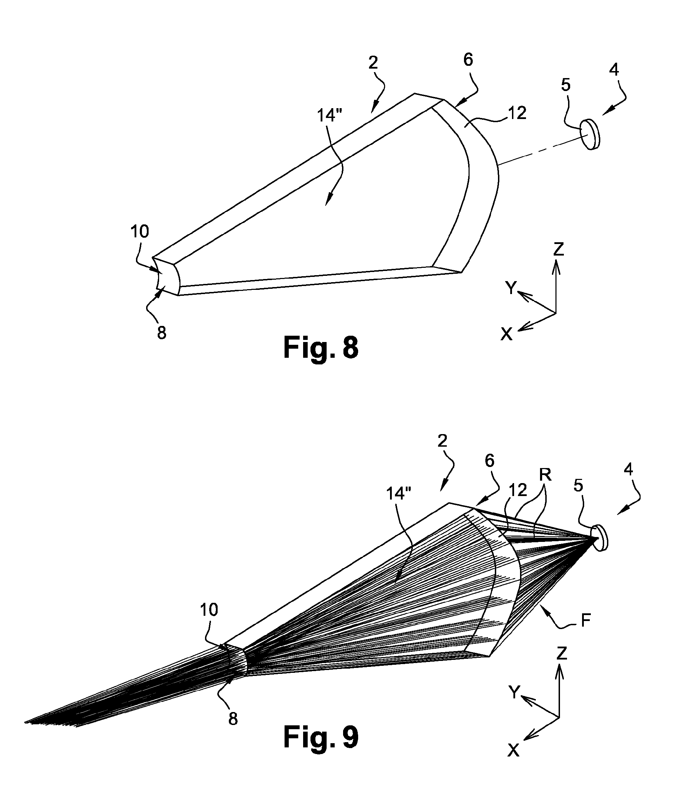

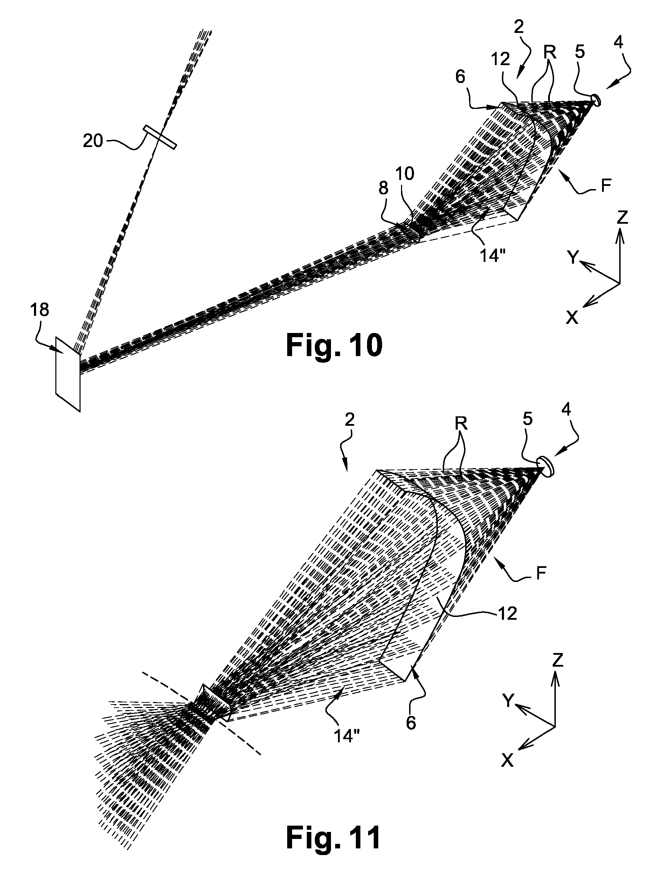

On a illustré en figures 8 à 12 un dispositif optique 2 selon un deuxième mode de réalisation de l'invention. Ce dispositif optique 2 diffère des précédents en ce que les moyens formant objectif 6 et anamorphoseur 8 comprennent deux dioptres courbes de réfraction 10, 12 situés en aval de la diode laser 4 en considérant le sens de propagation du faisceau lumineux F, le dioptre le plus éloigné de la diode laser 4, dit dioptre distant 10, étant divergent, et l'autre dioptre, dit dioptre proche 12, étant convergent et présentant une courbure dans le plan contenant les axes optique X et lent Y différente de la courbure dans le plan contenant les axes optique X et rapide Z. Les dioptres distant 10 et proche 12 sont respectivement formés par une surface d'entrée de lumière et une surface de sortie de lumière d'une lentille 14", la surface d'entrée de lumière de cette lentille 14" étant astigmate.

La face d'entrée de cette lentille 14" regroupe les fonctions optiques des deux surfaces de la première lentille 14a' du mode de réalisation à deux lentilles ou des deux premières lentilles 14a, 14b du mode de réalisation à trois lentilles.

Dans un premier temps, on suppose plane la surface de sortie de la lentille 14" et on calcule la face d'entrée de façon à ce que la lentille 14" soit stigmatique (en prenant en compte la traversée de la lame protectrice 5 de la diode laser 4) entre un point situé au centre de l'ouverture d'émission et un arc de cercle centré sur l'intersection de l'axe optique X et de la cible 20, contenu dans le plan parallèle à l'axe lent Y de la diode laser 4. On transforme ainsi une onde sphérique en une onde torique. Il s'agit d'un problème classique, dont la mise en équation se fait grâce au théorème de Fermat.

Dans un second temps, on calcule une lentille stigmatique entre l'arc de cercle précédent et l'intersection de l'axe optique X et de la cible 20, de face d'entrée plane, confondue avec la sortie plane fictive du calcul précédent et d'épaisseur nulle au centre. Cette "lentille" est divergente car l'onde torique est virtuelle. Le calcul est similaire à celui de la face d'entrée, exceptée la prise en compte de la traversée de la lame plane de protection 5.

Les deux faces planes fictives, confondues, étant omises, on obtient une lentille unique 14".

On a détaillé dans ce qui suit les calculs permettant de définir cette lentille.

Calcul du dioptre proche 12 :

On considère un point $\tau = (x_t, y_t)$ du cercle correspondant à l'onde torique lorsque le rayon mineur s'annule. On définit ce point par un angle u tel que :

$$\begin{pmatrix} x_t \\ y_t \end{pmatrix} = \begin{pmatrix} T + \mathcal{E} + \Delta - (\Delta - q) \cos u \\ (\Delta - q) \sin u \end{pmatrix}$$

On considère un rayon de l'onde torique passant par ce point, définit par un angle v tel que la direction de propagation du rayon soit $-\vec{\tau}$ où

$$\vec{\iota} = \begin{pmatrix} -\cos v \cos u \\ \cos v \sin u \\ \sin v \end{pmatrix}$$

Le point par lequel passe le rayon sur la face de sortie plane hypothétique est

$$S_P = \begin{pmatrix} x_{S_P} \\ y_{S_P} \\ z_{S_P} \end{pmatrix} = \begin{pmatrix} \mathcal{T} + \mathcal{E} \\ \Delta \tan u \\ \left( \dfrac{\Delta}{\cos u} - (\Delta - q) \right) \tan v \end{pmatrix}$$

Soit r la direction du rayon dans la matière : r se déduit de $\vec{\tau}$ par réfraction sur la dace plane (lois de Descartes).
Soit M le point courant recherché sur le dioptre proche 12 et λ la longueur du trajet du rayon dans la matière :

$$M = \begin{pmatrix} x_M \\ y_M \\ z_M \end{pmatrix}$$

$$\overrightarrow{S_P M} = \lambda \vec{r} \qquad\qquad (8)$$

Pour la surface recherchée, le rayon passant par le point M est issu de l'origine du repère.
Soit α l'angle qu'il fait avec l'axe optique X : on décrit la traversée de la lame de protection 5 de la diode laser 4 en se plaçant dans le plan $(O, \overrightarrow{OM}, X)$ qui contient le rayon entre les points M et O par

$$\begin{cases} l \tan \beta + (x_M - l) \tan \alpha = \sqrt{y_M^2 + z_M^2} \\ n_l \sin \beta = \sin \alpha \end{cases} \qquad\qquad (9)$$

En outre le stigmatisme implique la constance du chemin optique entre τ et l'origine du repère :

$$\frac{1}{\cos v}\left( \frac{\Delta}{\cos u} - \Delta + q \right) + n\lambda + \frac{x_M - l}{\cos \alpha} + n_l \frac{l}{\cos \beta} = \mathcal{T} + (n_l - 1)l + n\mathcal{E} + q \qquad (10)$$

En remplaçant $x_M$, $y_M$ et $z_M$ d'après (8), {(9), (10)} constitue un système de deux équations à deux inconnues (α et λ (β est immédiatement éliminé dans (9))), fonction des paramètres physiques et géométriques du dispositif optique 2 et des angles u et v ; système qui est résolu numériquement.
De λ on déduit M d'après (8). En faisant varier u et v on décrit la surface du dioptre proche 12.

Calcul du dioptre distant 10 :

Soit P le point courant recherché et ρ la longueur du trajet dans la lentille 14" du rayon réel (virtuellement issu de τ) :

$$\overrightarrow{S_P P} = -\rho \vec{r} \qquad\qquad (11)$$

Chemin optique constant (de τ au point F du dispositif de conversion) :

$$F = \begin{pmatrix} \mathcal{T} + \mathcal{E} + \Delta \\ 0 \\ 0 \end{pmatrix}$$

$$-\frac{1}{\cos v}\left(\frac{\Delta}{\cos u} - \Delta + q\right) + n\rho + PF = -q + \Delta \qquad (12)$$

or

$$PF^2 = \left(\overrightarrow{S_P F} - \overrightarrow{S_P P}\right) \cdot \left(\overrightarrow{S_P F} - \overrightarrow{S_P P}\right) = \left(\overrightarrow{S_P F} + \rho\vec{r}\right) \cdot \left(\overrightarrow{S_P F} + \rho\vec{r}\right) = S_P F^2 + \rho^2 + 2\left(\overrightarrow{S_P F} \cdot \vec{r}\right)\rho$$

Donc (12) est une équation en ρ (polynomiale du second degré en l'élevant au carré après avoir isolé PF).

De ρ on déduit P d'après (11). En faisant varier u et v on décrit la surface du dioptre distant 10.

Les deux modes de réalisation décrits précédemment s'appliquent à un feu pour véhicule automobile, comprenant :

- la diode laser 4 émettant le faisceau lumineux F suivant l'axe optique X, l'axe lent Y et l'axe rapide Z, ces axes étant perpendiculaires deux à deux,
- le dispositif de conversion de longueur d'onde comprenant la cible 20,
- l'organe 18 de moyens de balayage, comprenant au moins un micro-miroir, pour balayer le faisceau lumineux F sur la cible 20, et
- le dispositif optique 2 pour former un spot lumineux de forme prédéterminée sur la cible 20 à partir du faisceau lumineux F émis par la diode laser 4 grâce au balayage formé par l'organe 18.

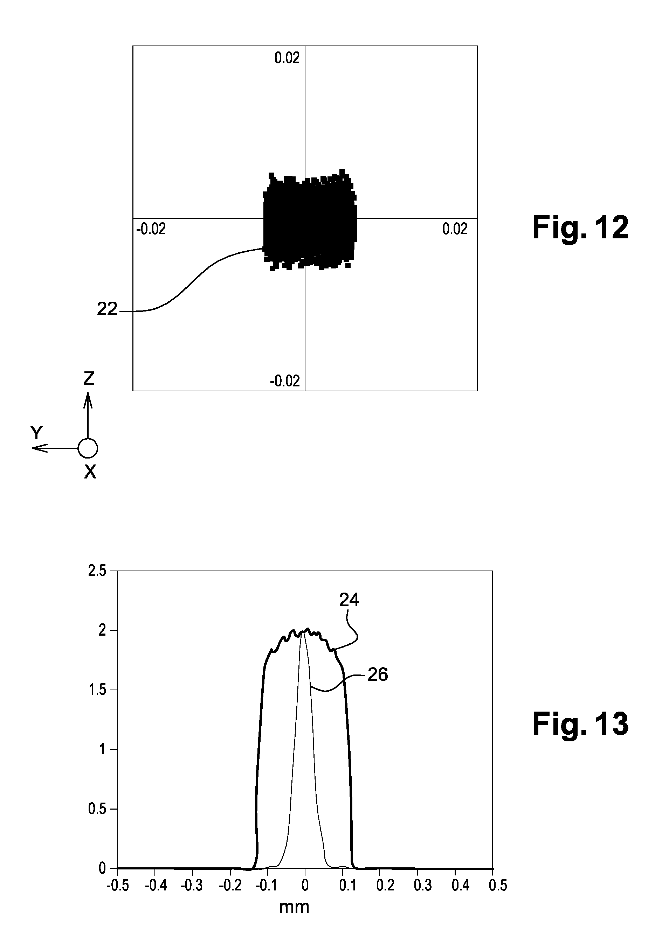

On a illustré en figure 12 le spot lumineux 22 formée sur la cible 20 grâce à la diode laser 4 et le dispositif optique 2 selon l'un quelconque des modes de réalisation décrits précédemment. Le spot est de forme générale rectangulaire.

La figure 13 montre la répartition en intensité lumineuse dans le spot illustré dans la figure 12, respectivement le long de l'axe lent Y par une première courbe 24 et le long de l'axe rapide Z par une seconde courbe 26.

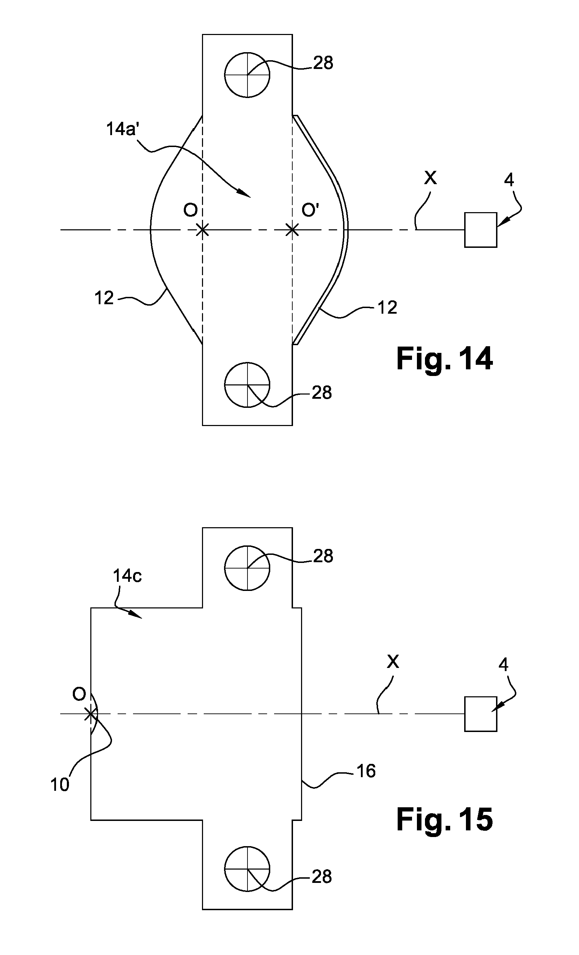

Les figures 14 et 15 illustrent les deux lentilles 14a' et 14c de la variante du premier mode de réalisation, qui sont représentées en figures 3 à 6. Sur les figures 14 et 15 on a également représenté des prolongements des lentilles 14a' et 14c formant des moyens d'accrochage 28 de ces lentilles sur un support classique.

Bien entendu, on pourra apporter à l'invention de nombreuses modifications sans sortir du cadre de celle-ci.

Les lentilles et la lame de protection de la diode laser peuvent comprendre d'autres matériaux que ceux décrit plus haut.

La diode laser peut émettre un faisceau lumineux de longueur d'onde différente de celle donnée à titre d'exemple plus haut.

**Revendications**

1. Dispositif optique (2) pour former un spot lumineux de forme prédéterminée sur une cible (20) formant partie d'un dispositif de conversion de longueur d'onde, à partir d'un faisceau lumineux (F) émis par une diode laser (4) et balayé par un organe (18) de moyens de balayage, la diode laser (4) émettant le faisceau (F) suivant un axe optique (X), un axe lent (Y) et un axe rapide (Z), ces axes étant perpendiculaires deux à deux, **caractérisé en ce qu'**il comprend des moyens optiques formant à la fois un objectif de projection (6), dans le plan contenant les axes optique (X) et lent (Y), et un anamorphoseur (8), dans le plan contenant les axes optique (X) et rapide (Z).

2. Dispositif (2) selon la revendication 1, dans lequel les moyens formant objectif (6) et anamorphoseur (8) comprennent trois dioptres courbes de réfraction (10, 12) situés en aval de la diode laser (4) en considérant le sens de propagation du faisceau lumineux (F), le dioptre le plus éloigné de la diode, dit dioptre distant (10), étant divergent et les deux autres, dits dioptres proches (12), étant convergents.

3. Dispositif (2) selon la revendication 2, dans lequel chacun des dioptres courbes de réfraction (10, 12) est formé par une lentille (14a-14c) présentant une surface plane d'entrée de lumière (16) et une surface courbe de sortie de lumière, la surface de sortie de lumière de la lentille la plus éloignée (14c) de la diode (4) formant le dioptre distant

(10), et les surfaces de sortie de lumière des deux autres lentilles (14a, 14b) formant les deux dioptres proches (12).

4. Dispositif (2) selon la revendication 2, dans lequel les deux dioptres proches (12) sont formés par des surfaces respectivement d'entrée et de sortie de lumière d'une lentille convexe convergente (14a'), et le dioptre distant (10) est formé par une surface de sortie de lumière d'une lentille concave divergente (14c), une surface d'entrée de lumière (16) de la lentille concave divergente (14c) étant plane.

5. Dispositif (2) selon la revendication 1, dans lequel les moyens formant objectif (6) et anamorphoseur (8) comprennent deux dioptres courbes de réfraction (10, 12) situés en aval de la diode laser (4) en considérant le sens de propagation du faisceau lumineux (F), le dioptre le plus éloigné de la diode (4), dit dioptre distant (10), étant divergent, et l'autre dioptre, dit dioptre proche (12), étant convergent et présentant une courbure dans le plan contenant les axes optique (X) et lent (Y) différente de la courbure dans le plan contenant les axes optique (X) et rapide (Z).

6. Dispositif (2) selon la revendication 5, dans lequel les dioptres distant (10) et proche (12) sont respectivement formés par une surface d'entrée de lumière et une surface de sortie de lumière d'une lentille (14"), la surface d'entrée de lumière de cette lentille (14") étant astigmate.

7. Dispositif (2) selon l'une quelconques des revendications précédentes, dans lequel les moyens formant objectif (6) et anamorphoseur (8) sont fabriqués au moins en partie dans un matériau choisi parmi le silicone, le polyméthacrylate de méthyle et un verre.

8. Dispositif (2) selon l'une quelconque des revendications précédentes, dans lequel la diode laser (4) présente une facette de sortie du faisceau lumineux de forme générale rectangulaire, la longueur de chaque côté de cette facette de sortie étant au moins deux fois supérieure à la longueur d'onde du faisceau lumineux (F) émis par la diode (4), et la longueur du plus grand côté de cette facette étant au moins deux fois supérieure à celle du petit côté.

9. Dispositif (2) selon l'une quelconque des revendications précédentes, dans lequel la longueur d'onde du faisceau lumineux (F) émis par la diode laser (4) est inférieure à 450 nm.

10. Feu pour véhicule automobile, comprenant :

- une diode laser (4) émettant un faisceau lumineux (F) suivant un axe optique (X), un axe lent (Y) et un axe rapide (Z), ces axes étant perpendiculaires deux à deux,
- un dispositif de conversion de longueur d'onde comprenant une cible (20),
- un organe (18) de moyens de balayage pour balayer le faisceau lumineux (F) sur la cible (20), et
- un dispositif optique (2) pour former un spot lumineux de forme prédéterminée sur la cible (20) à partir du faisceau lumineux (F) émis par la diode laser (4),

**caractérisé en ce que** le dispositif optique (2) est selon l'une quelconque des revendications 1 à 9.

11. Feu selon la revendication précédente, dans lequel l'organe (18) de moyens de balayage comprend au moins un micro-miroir.

Fig. 1

Fig. 2

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Europäisches Patentamt**
**European Patent Office**
**Office européen des brevets**

## RAPPORT DE RECHERCHE EUROPEENNE

Numéro de la demande

EP 15 17 3843

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/158524 A1 (KONNO KENJI [JP] ET AL) 3 juillet 2008 (2008-07-03) | 1,7-9 | INV. G02B26/08 F21S8/10 G02B26/10 G02B27/09 |
| Y | * alinéas [0002], [0011], [0125], [0158] - [0163]; figure 10A * | 10,11 | |
| | ----- | | |
| X | EP 1 674 914 A1 (CANON KK [JP]) 28 juin 2006 (2006-06-28) | 1,7-9 | |
| Y | * alinéas [0042] - [0043]; figures 1A-2B,20,21 * | 10,11 | |
| | ----- | | |
| X | US 5 159 485 A (NELSON WILLIAM E [US]) 27 octobre 1992 (1992-10-27) | 1,7-9 | |
| Y | * colonne 1, lignes 10-12; figure 4 * * colonne 3, ligne 58 - colonne 4, ligne 3 * * colonne 4, lignes 52-62 * | 10,11 | |
| | ----- | | |
| X | US 2012/293775 A1 (KITA HIROMI [JP] ET AL) 22 novembre 2012 (2012-11-22) | 1,7-9 | |
| Y | * alinéas [0028], [0031], [0081] - [0089]; figure 10 * | 10,11 | DOMAINES TECHNIQUES RECHERCHES (IPC) |
| | ----- | | |
| Y | US 2014/029282 A1 (RAVIER JEAN-PAUL [FR] ET AL) 30 janvier 2014 (2014-01-30) * alinéas [0080] - [0087]; figures 1,2 * | 10,11 | G02B F21S |
| | ----- | | |

Le présent rapport a été établi pour toutes les revendications

| Lieu de la recherche | Date d'achèvement de la recherche | Examinateur |
|---|---|---|
| Berlin | 6 novembre 2015 | Verdrager, Véronique |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 17 3843

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-11-2015

| Document brevet cité au rapport de recherche | | Date de publication | Membre(s) de la famille de brevet(s) | | Date de publication |
|---|---|---|---|---|---|
| US 2008158524 | A1 | 03-07-2008 | JP 2008164955 A<br>US 2008158524 A1 | | 17-07-2008<br>03-07-2008 |
| EP 1674914 | A1 | 28-06-2006 | AT 470883 T<br>CN 1794037 A<br>EP 1674914 A1<br>JP 4522253 B2<br>JP 2006178346 A<br>KR 20060073506 A<br>US 2006139718 A1 | | 15-06-2010<br>28-06-2006<br>28-06-2006<br>11-08-2010<br>06-07-2006<br>28-06-2006<br>29-06-2006 |
| US 5159485 | A | 27-10-1992 | AUCUN | | |
| US 2012293775 | A1 | 22-11-2012 | CN 102789055 A<br>JP 5517992 B2<br>JP 2012242626 A<br>US 2012293775 A1 | | 21-11-2012<br>11-06-2014<br>10-12-2012<br>22-11-2012 |
| US 2014029282 | A1 | 30-01-2014 | CN 103574473 A<br>EP 2690352 A1<br>FR 2993831 A1<br>JP 2014029858 A<br>US 2014029282 A1 | | 12-02-2014<br>29-01-2014<br>31-01-2014<br>13-02-2014<br>30-01-2014 |

EPO FORM P0460

Pour tout renseignement concernant cette annexe : voir Journal Officiel de l'Office européen des brevets, No.12/82